# FASCICULE DE BREVET EUROPEEN

(11) **EP 3 980 692 B1**
(45) Date de publication et mention de la délivrance du brevet: **23.10.2024**
(21) Numéro de dépôt: 20740371.8
(22) Date de dépôt: 03.06.2020
(51) Int. Cl.: F23R 3/04, F23R 3/00

(54) **PROCÉDÉ DE FABRICATION D'UN TUBE À FLAMME POUR UNE TURBOMACHINE**
VERFAHREN ZUR HERSTELLUNG EINES FLAMMROHRS FÜR EINE TURBOMASCHINE
METHOD FOR MANUFACTURING A FLAME TUBE FOR A TURBOMACHINE

(30) Priorité: 07.06.2019 FR 1906073; 07.06.2019 FR 1906074
(43) Date de publication de la demande: 13.04.2022
(73) Titulaire: Safran Helicopter Engines, 64510 Bordes (FR)
(72) Inventeur: LAVIGNOTTE, Stéphane, 77550 MOISSY-CRAMAYEL (FR); COTTIN, Guillaume Thierry, 77550 MOISSY-CRAMAYEL (FR); AUTRET, Jean-Paul Didier, 77550 MOISSY-CRAMAYEL (FR); DELIBA, Mehdi, 77550 MOISSY-CRAMAYEL (FR); GRESY, Thomas Sebastien Alexandre, 77550 MOISSY-CRAMAYEL (FR); SAVARY, Nicolas, Roland, Guy, 77550 MOISSY-CRAMAYEL (FR)
(74) Mandataire: Ernest Gutmann - Yves Plasseraud S.A.S.
(86) Numéro de dépôt international: PCT/FR2020/050940
(87) Numéro de publication internationale: WO 2020/245537

(56) Documents cités:
- EP-A1- 3 073 196
- EP-A1- 3 144 485
- EP-A1- 3 447 382
- EP-A2- 0 724 119
- WO-A1-2018/144008
- DE-A1- 102017 216 595
- US-A1- 2018 163 964

## Description

### Domaine technique de l'invention

L'invention concerne un procédé de fabrication d'un tube à flamme pour une turbomachine, notamment pour un hélicoptère ou un avion.

### Etat de la technique antérieure

Une turbomachine comporte classiquement, d'amont en aval dans le sens de circulation des gaz au sein de la turbomachine, une soufflante, un ou plusieurs étages de compresseurs, par exemple un compresseur basse pression et un compresseur haute pression, une chambre de combustion, un ou plusieurs étages de turbine, par exemple une turbine haute pression et une turbine basse pression, et une tuyère d'échappement des gaz.

La chambre de combustion est délimitée par des carters de révolution interne et externe coaxiaux et reliés en amont à un carter annulaire de fond de chambre. Le carter externe de la chambre est fixé sur une enveloppe externe de la turbomachine, le carter interne de la chambre étant fixé sur une enveloppe interne ou relié au carter externe.

La chambre de combustion comprend par ailleurs un tube à flamme ou foyer, qui est le siège de la combustion des gaz.

Le tube à flamme peut être torique et à écoulement direct. Dans ce cas, il comprend des parois annulaires réunies au niveau d'une extrémité amont par une paroi de fond ou d'extrémité et un carénage comportant des orifices de passage d'injecteurs de carburant montés sur la chambre de combustion.

En variante, le tube à flamme peut être à écoulement inversé et présenter une forme annulaire coudée permettant de renvoyer l'écoulement gazeux vers l'aval de la turbomachine, en direction de la turbine. L'écoulement des gaz se fait alors successivement de l'aval vers l'amont puis à nouveau vers l'aval de la chambre de combustion. Les injecteurs sont dans ce cas généralement montés au niveau d'une surface d'extrémité ou de tête du tube à flamme. Un tube à flamme à écoulement inversé est notamment connu du document FR 2 996 289. Un tube à flamme est généralement formé de plusieurs pièces obtenues à partir de tôles embouties, puis assemblées les unes aux autres. Ces pièces subissent par ailleurs des opérations d'usinage, notamment de perçage.

Un tel procédé de fabrication est relativement long et coûteux à mettre en oeuvre et ne permet pas de modifier aisément la géométrie des pièces embouties. En effet, de telles modifications nécessitent le remplacement des matrices d'emboutissage, ce qui est particulièrement coûteux.

Le document WO2018/144008 décrit un tube à flamme pour turbomachine et son procédé de fabrication.

Par ailleurs, la paroi d'extrémité est soumise à des contraintes thermiques importantes, qu'il convient de réduire afin d'éviter un endommagement prématuré du tube à flamme. L'invention vise à proposer une solution à ces problèmes, de façon simple, fiable et peu onéreuse.

### Présentation de l'invention

A cet effet, l'invention concerne un procédé de fabrication d'un tube à flamme pour une turbomachine, ledit tube à flamme s'étendant autour d'un axe et comportant une paroi annulaire radialement interne et une paroi annulaire radialement externe, reliées l'une à l'autre par une paroi d'extrémité ou de tête, la paroi interne, la paroi externe et la paroi d'extrémité définissant un volume interne, au moins une partie de ladite paroi d'extrémité formant une double paroi comprenant une première partie et une seconde partie reliées l'une à l'autre et écartées l'une de l'autre de manière à délimiter un canal d'écoulement d'un flux d'air de refroidissement débouchant dans ledit volume interne, ledit canal d'écoulement comportant au moins une ouverture d'entrée d'air, les première et seconde parties de la double paroi étant reliées par des zones de liaison ou pontets s'étendant dans le canal d'écoulement du flux d'air de refroidissement, ledit tube à flamme étant réalisé par fabrication additive.

Un tel procédé permet de réaliser un tube à flamme de structure complexe, en une seule pièce, ne nécessitant pas de nombreuses et coûteuses étapes additionnelles d'usinage ou d'assemblage, de manière à obtenir directement un tube à flamme fini ou quasiment fini, prêt à être utilisé dans la turbomachine.

La présence de la double paroi et du canal de circulation d'air permet de refroidir la seconde partie de la double paroi, de façon à limiter les risques de détérioration de la paroi d'extrémité. Les zones de liaison ou pontets permettent d'assurer la tenue mécanique de la double paroi, de calibrer la section de passage du canal correspondant et/ou de permettre la fabricabilité de la seconde partie de la double paroi.

Le tube à flamme peut être réalisé de façon monobloc, c'est-à-dire en une seule pièce. Outre une opération de découpe ou d'ébavurage par exemple, le tube à flamme peut être ainsi être réalisé sans opération de reprise d'usinage.

Le tube à flamme peut être réalisé par frittage ou fusion sélective de poudre, par exemple à l'aide d'un faisceau laser ou d'un faisceau d'électrons.

Un tel procédé comprend généralement une étape durant laquelle est déposée, sur un plateau de fabrication, une première couche de poudre d'un métal, d'un alliage métallique ou de céramique d'épaisseur contrôlée, puis une étape consistant à chauffer avec un moyen de chauffage (un faisceau laser ou un faisceau d'électrons) une zone prédéfinie de la couche de poudre, et de procéder en répétant ces étapes pour chaque couche supplémentaire, jusqu'à l'obtention, tranche par tranche, de la pièce finale. Un outillage et un procédé de fabrication d'une pièce par fusion sélective ou frittage sélectif de poudre sont par exemple décrits dans la demande de brevet français FR 3 030 323 au nom de la Demanderesse.

Au moins une zone de liaison ou pontet comporte au moins une zone tronconique ou évasée.

La zone tronconique ou évasée peut s'évaser de la première partie vers la seconde partie de la double paroi.

Au moins une zone de liaison ou pontet peut comporter au moins une première zone conique ou évasée, située du côté de la première partie et une seconde zone conique ou évasée, située du côté de la seconde partie, la seconde zone conique ou évasée présentant un angle d'évasement supérieur à l'angle d'évasement de la première zone conique ou évasée.

L'angle d'évasement peut être défini comme l'angle du cône de la zone tronconique correspondante par exemple. La seconde zone tronconique ou évasée est ainsi plus évasée que la première zone tronconique ou évasée.

Les zones de liaisons ou pontets peuvent être agencées sous la forme d'au moins une rangée s'étendant circonférentiellement.

Les zones de liaison ou pontets peuvent être régulièrement réparties le long de ladite rangée, sur la circonférence.

Les zones de liaison ou pontets peuvent être agencés sous la forme d'une pluralité de rangées s'étendant chacune dans la direction circonférentielle et décalées les unes des autres dans la direction radiale et/ou axiale.

La première partie de la double paroi peut comporter des multiperforations débouchant dans le canal d'écoulement du flux d'air de refroidissement, lesdites multiperforations formant des ouvertures d'entrée d'air.

Le tube à flamme peut être réalisé par empilement de couches, la direction d'empilement des couches étant parallèle à l'axe du tube à flamme.

Le tube à flamme peut être réalisé en un alliage à base de cobalt ou de nickel.

Le présent document concerne également un procédé de fabrication d'un tube à flamme pour une turbomachine, ledit tube à flamme s'étendant autour d'un axe et comportant une paroi annulaire radialement interne et une paroi annulaire radialement externe, reliées l'une à l'autre par une paroi d'extrémité ou de tête, la paroi interne, la paroi externe et la paroi d'extrémité définissant un volume interne, au moins une partie de ladite paroi d'extrémité formant une double paroi comprenant une première partie et une seconde partie reliées l'une à l'autre et écartées l'une de l'autre de manière à délimiter un canal d'écoulement d'un flux d'air de refroidissement débouchant dans ledit volume interne, ledit canal d'écoulement comportant au moins une ouverture d'entrée d'air, ledit tube à flamme étant réalisé de façon monobloc, c'est-à-dire d'une seule pièce, par fabrication additive.

Les termes axial, radial et circonférentiel sont définis par rapport à l'axe de révolution du tube à flamme.

Un tel procédé permet de réaliser un tube à flamme de structure complexe, en une seule pièce, ne nécessitant pas de nombreuses et coûteuses étapes additionnelles d'usinage ou d'assemblage, de manière à obtenir directement un tube à flamme fini ou quasiment fini, prêt à être utilisé dans la turbomachine.

Outre une opération de découpe ou d'ébavurage par exemple, le tube à flamme peut être ainsi être réalisé sans opération de reprise d'usinage.

La présence de la double paroi et du canal de circulation d'air permet de refroidir la seconde partie de la double paroi, de façon à limiter les risques de détérioration de la paroi d'extrémité. Le tube à flamme peut être réalisé par frittage ou fusion sélective de poudre, par exemple à l'aide d'un faisceau laser ou d'un faisceau d'électrons.

Un tel procédé comprend généralement une étape durant laquelle est déposée, sur un plateau de fabrication, une première couche de poudre d'un métal, d'un alliage métallique ou de céramique d'épaisseur contrôlée, puis une étape consistant à chauffer avec un moyen de chauffage (un faisceau laser ou un faisceau d'électrons) une zone prédéfinie de la couche de poudre, et de procéder en répétant ces étapes pour chaque couche supplémentaire, jusqu'à l'obtention, tranche par tranche, de la pièce finale. Un outillage et un procédé de fabrication d'une pièce par fusion sélective ou frittage sélectif de poudre sont par exemple décrits dans la demande de brevet français FR 3 030 323 au nom de la Demanderesse.

Le tube à flamme peut être réalisé par empilement de couches, la direction d'empilement des couches étant parallèle à l'axe du tube à flamme.

Le tube à flamme peut être réalisé en un alliage à base de nickel ou de cobalt.

La seconde partie de la double paroi peut être située du côté du volume interne du tube à flamme, ladite seconde partie comportant une première extrémité reliée à la première partie de la double paroi et une seconde extrémité libre au niveau de laquelle le canal d'écoulement du flux d'air de refroidissement débouche dans ledit volume interne.

La seconde extrémité peut être l'extrémité radialement interne de la deuxième partie de la double paroi.

Les première et seconde parties de la double paroi peuvent être reliées par des zones de liaison ou pontets s'étendant dans le canal d'écoulement du flux d'air de refroidissement. Les zones de liaison ou pontets permettent d'assurer la tenue mécanique de la double paroi et/ou de calibrer la section de passage du canal correspondant et de garantir la fabricabilité de cette double paroi.

Les zones de liaison ou pontets peuvent s'étendre parallèlement à la direction d'empilement des couches.

La première partie de la double paroi peut comporter des multiperforations débouchant dans le canal d'écoulement du flux d'air de refroidissement, lesdites multiperforations formant des ouvertures d'entrée d'air.

Le tube à flamme peut comporter une paroi de guidage d'un flux d'air délimitant un canal de guidage d'air de refroidissement avec la paroi d'extrémité, ledit canal débouchant dans le volume interne parallèlement à la paroi d'extrémité, ledit canal de guidage d'air comportant au moins une ouverture d'entrée d'air.

En particulier, le canal de guidage d'air peut comporter des multiperforations formant une multitude d'entrée d'air.

La paroi de guidage peut être reliée à la paroi d'extrémité par l'intermédiaire de zones de liaison ou de pontets s'étendant dans le canal correspondant.

La paroi radialement interne et/ou la paroi radialement externe peuvent comporter une bride de fixation, située à l'opposé de la paroi d'extrémité.

Les parois interne et/ou externe peuvent comporter des multiperforations, par exemple obtenues de façon brut.

L'une au moins desdites brides peut comporter des multiperforations à proximité de la zone de liaison entre la bride et la paroi interne ou externe correspondante.

L'une au moins des brides peut comporter des ailettes de refroidissement s'étendant au niveau des multiperforations correspondantes.

Lesdites ailettes et les multiperforations permettent de favoriser le refroidissement de la bride correspondante.

Lesdites ailettes et les ouvertures peuvent être régulièrement réparties sur la circonférence. L'une au moins des multiperforations ou chaque multiperforation peut comporter une section présentant une zone de forme carrée, rectangulaire ou losange et une zone de forme triangulaire.

La paroi radialement externe peut comporter une ouverture destinée au montage d'un injecteur de carburant.

Le procédé peut comporter une étape de montage d'une douille dans ladite ouverture destinée au montage de l'injecteur.

La douille peut être montée par décolletage ou sertissage.

La douille peut comporter un diamètre interne obtenu par usinage.

### Brève description des figures

[Fig. 1] est une demie-vue en coupe d'un tube à flamme réalisé à l'aide du procédé selon l'invention,
[Fig. 2] est une vue en coupe et en perspective d'une partie du tube à flamme de la figure 1,
[Fig. 3] est une vue en perspective, de détail, illustrant une forme de réalisation de la double paroi,
[Fig. 4] est une vue en perspective, de détail, illustrant une autre forme de réalisation de la double paroi,
[Fig. 5] est une vue en perspective, de détail et avec arrache partiel, illustrant la double paroi de la figure 4,
[Fig. 6] est une vue en coupe de la double paroi des figures 4 et 5
[Fig. 7] est une vue en coupe illustrant une double paroi selon une autre forme de réalisation de l'invention,
[Fig. 8] est une vue en perspective de détail, d'une autre forme de réalisation, montrant la zone de la paroi extérieure pourvue de la bride extérieure,
[Fig. 9] est une en perspective de détail montrant une partie de la paroi d'extrémité et de la paroi de guidage du tube à flamme,
[Fig. 10] est une vue en perspective de détail montrant la zone du tube à flamme pourvue de la paroi de guidage,
[Fig. 11] est une vue en coupe de détail montrant la zone du tube à flamme pourvue de la paroi de guidage,
[Fig. 12] est une vue de détail illustrant la structure des pontets reliant notamment la paroi de guidage à la paroi d'extrémité,
[Fig. 13] est une vue montrant l'orientation du tube à flamme lors de sa réalisation par fabrication additive.

### Description détaillée de l'invention

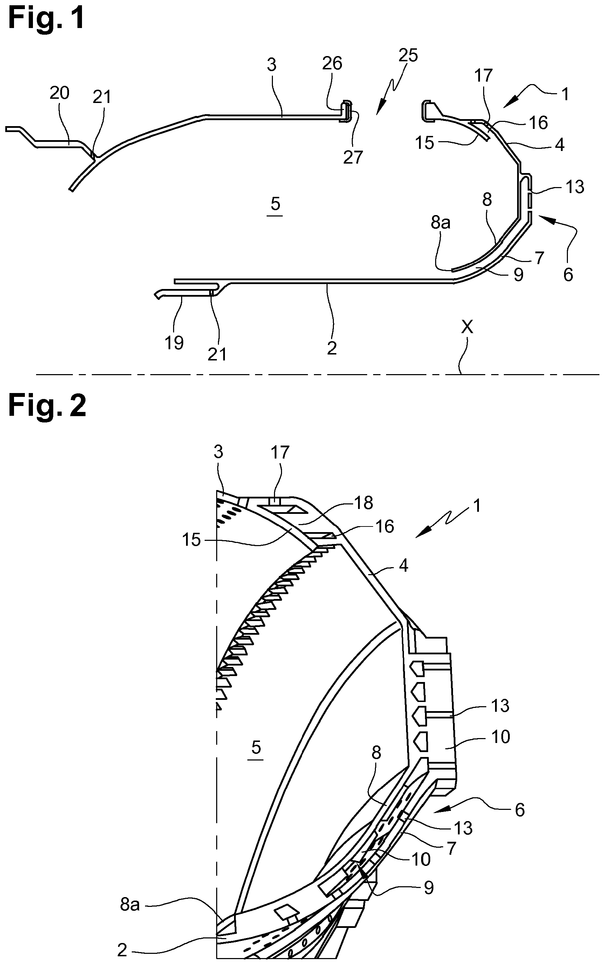

Les figures 1 et 2 illustrent un tube à flamme 1 obtenu à l'aide du procédé de fabrication selon l'invention. Le tube à flamme 1 est annulaire et s'étend autour d'un axe X. Le tube à flamme 1 est monobloc et comporte une paroi annulaire radialement interne 2 et une paroi annulaire radialement externe 3, reliées l'une à l'autre par une paroi d'extrémité ou de tête 4, la paroi interne 2, la paroi externe 3 et la paroi d'extrémité 4 définissant un volume interne 5.

Une partie de ladite paroi d'extrémité 4 forme une double paroi 6 comprenant une première partie 7 et une seconde partie 8 reliées l'une à l'autre et écartées l'une de l'autre de manière à délimiter un canal 9 d'écoulement d'un flux d'air de refroidissement débouchant dans ledit volume interne 5.

La seconde partie 8 de la double paroi 6 est située du côté du volume interne 5 du tube à flamme 1. La seconde partie 8 comporte une première extrémité, radialement externe, reliée à la première partie 7 de la double paroi 6 et une seconde extrémité libre 8a, radialement interne, au niveau de laquelle le canal 9 d'écoulement du flux d'air de refroidissement débouche dans ledit volume interne 5.

Les première et seconde parties 7, 8 de la double paroi 6 sont reliées par des zones de liaison ou pontets 10 s'étendant dans le canal d'écoulement 9.

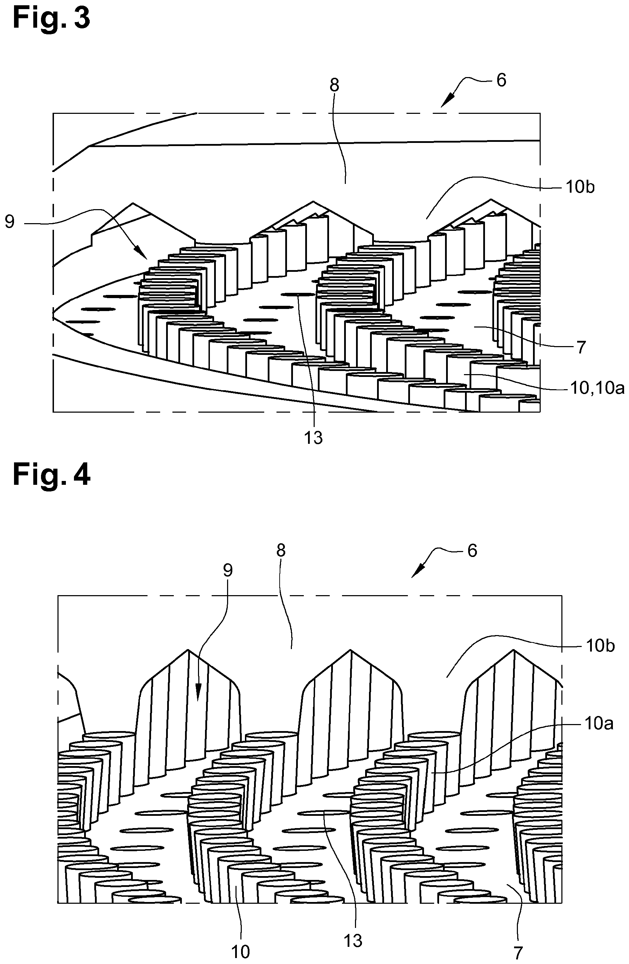

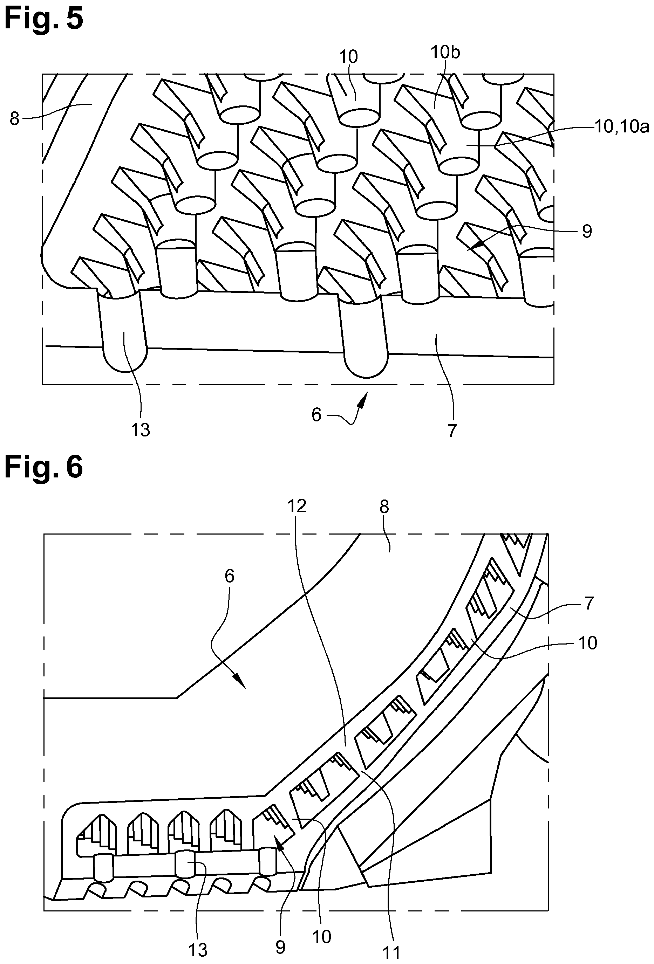

Comme cela est mieux visible aux figures 3 à 7, chaque pontet 10 s'étend selon un axe et comporte une première extrémité 11 (figure 6) reliée à la première partie 7 de la double paroi 6 et une seconde extrémité 12 reliée à la seconde partie 8 de la double paroi 6. Chaque pontet 11 présente une forme générale évasée, ici en direction de la seconde partie 8.

Dans les formes de réalisation représentées aux figures 3 à 7, chaque pontet 10 comporte une première zone tronconique 10a située du côté de la première partie 7 et une seconde zone tronconique 10b située du côté de la seconde partie 8. La seconde zone tronconique 10b est plus évasée que la première zone tronconique 10a. En d'autre terme, l'angle de cône de la seconde zone tronconique 10b est plus important que l'angle de cône de la première zone tronconique 10a. Les pontets 10 peuvent également comporter des congés ou des zones arrondies reliant au moins l'une des extrémités 11, 12 à la partie correspondante 7, 8 de la double paroi 6.

Les pontets 10 sont agencées en rangées, les rangées étant décalées radialement et/ou axialement les unes des autres. Les pontets 10 d'une même rangée sont régulièrement répartis sur la circonférence, autour de l'axe X.

La longueur des pontets 10, leur diamètre et/ou leur espacement les uns par rapport aux autres peuvent varier au sein de la double paroi 6. Des pontets 10 plus longs, présentant un diamètre plus faible et/ou plus espacés les uns des autres, peuvent être situés dans les zones nécessitant une meilleure circulation de l'air au sein du canal correspondant, par exemple. Ledit canal d'écoulement 9 comporte des ouvertures d'entrée d'air 13 formées par des multiperforations ménagées dans la première partie 7 de la double paroi 6 Les multiperforations 13 sont régulièrement réparties le long de la surface de la première partie 7, entre les premières extrémités 11 des pontets 10.

Le tube à flamme 1 comporte en outre une paroi de guidage 15 d'un flux d'air de refroidissement délimitant un canal 16 de guidage d'air de refroidissement avec la paroi d'extrémité, ledit canal 16 débouchant dans le volume interne 5 parallèlement à la paroi d'extrémité 4. Ledit canal 16 de guidage d'air comporte également des multiperforations 17 formant des entrées d'air et des zones de liaison ou pontets 18 reliant la paroi de guidage 15 et la paroi d'extrémité 4. Le canal de guidage 16 débouche radialement vers l'intérieur et est apte à former un film d'air venant lécher la paroi d'extrémité 4.

La paroi radialement interne 2 et la paroi radialement externe 3 comportent également respectivement une bride de fixation interne 19 et une bride de fixation externe 20, situées axialement à l'opposé de la paroi d'extrémité 4.

Chaque bride de fixation 19, 20 comporte des multiperforations 21 à proximité de la zone de liaison entre la bride correspondante 19, 20 et la paroi interne ou externe 2, 3 correspondante. La paroi externe 3 comporte en outre une ouverture circulaire 25, entourée par un rebord 26. L'ouverture 25 est destinée au montage de moyens d'injection de carburant non représentée. Une douille 27 est montée par sertissage ou décolletage dans ladite ouverture 25. Le diamètre interne de la douille 27 peut être obtenu par usinage.

Le tube à flamme 1 est réalisé de façon monobloc, c'est-à-dire d'une seule pièce, (à l'exception de la douille qui n'appartient pas au tube à flamme monobloc), par fabrication additive, en particulier par frittage ou fusion sélective de poudre, par exemple à l'aide d'un faisceau laser ou d'un faisceau d'électrons.

Un tel procédé comprend une étape durant laquelle est déposée, sur un plateau de fabrication, une première couche de poudre d'un métal ou d'un alliage métallique d'épaisseur contrôlée, puis une étape consistant à chauffer avec un moyen de chauffage (un faisceau laser ou un faisceau d'électrons) une zone prédéfinie de la couche de poudre, et de procéder en répétant ces étapes pour chaque couche supplémentaire, jusqu'à l'obtention, tranche par tranche, de la pièce finale.

La zone de la première partie 7 de la double paroi 6 peut être attachée au plateau puis détachée, par exemple par usinage, afin de séparer la pièce 1 fabriquée du plateau.

Un outillage et un procédé de fabrication d'une pièce par fusion sélective ou frittage sélectif de poudre sont par exemple décrits dans la demande de brevet français FR 3 030 323 au nom de la Demanderesse.

Le tube à flamme 1 monobloc peut ainsi être réalisé par empilement de couches, la direction d'empilement des couches étant parallèle à l'axe X du tube à flamme 1.

Les couches ont des épaisseurs comprises par exemple entre 20 et 80 microns.

Le tube à flamme 1 est par exemple réalisé en un alliage à base de cobalt ou de nickel.

Les différentes zones du tube à flamme monobloc 1 ont de préférence ont inclinaison faible avec l'axe d'empilement des couches. Ainsi, à l'exception du rebord 26 et d'une partie de la paroi d'extrémité 4, les autres zones du tube à flamme 1 forme un angle inférieur à 60°, avec la direction d'empilement des couches. Des supports d'édification peuvent être utilisés pour les zones présentant une inclinaison supérieure, comme cela est connu en soi.

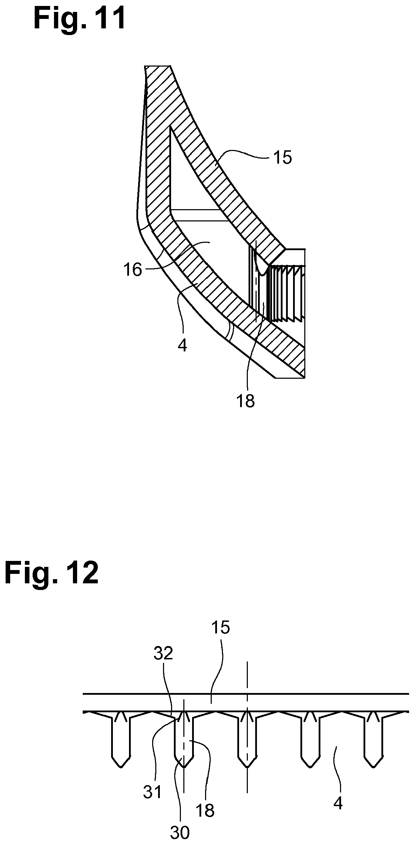

Chaque pontet 18 comporte une première extrémité 30 (figure 12) reliée à la paroi d'extrémité 4 et une seconde extrémité 31 reliée à la paroi de guidage 15. La seconde extrémité 31 peut comporter une zone de raccordement 32 s'évasant en direction de la paroi de guidage 15. La paroi radialement interne 2 et la paroi radialement externe 3 comportent également respectivement une bride de fixation interne 19 et une bride de fixation externe 20, situées axialement à l'opposé de la paroi d'extrémité 4.

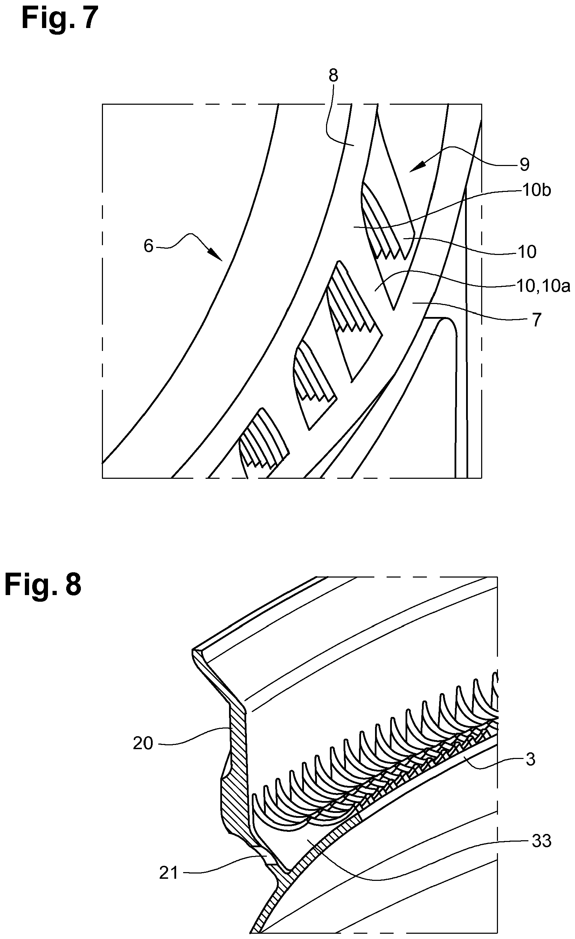

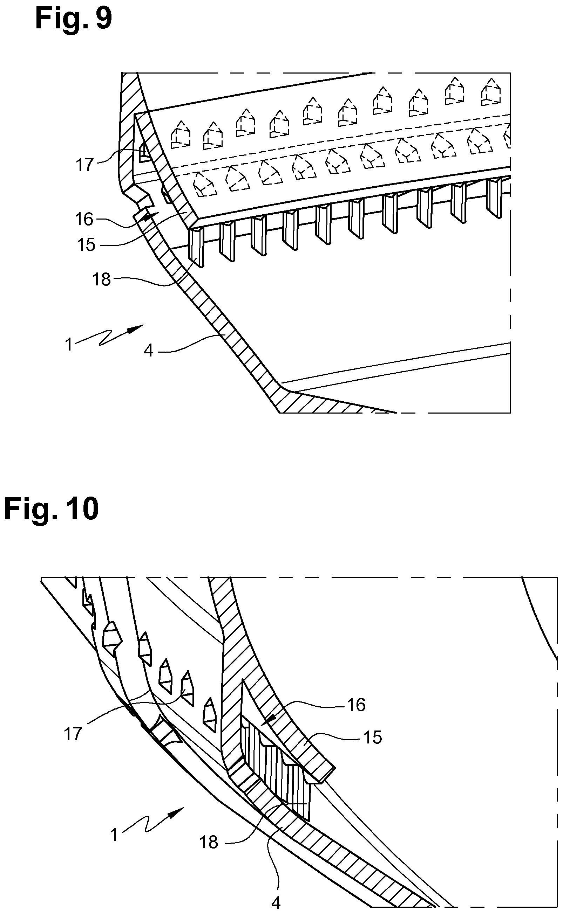

Chaque bride de fixation 19, 20 comporte des multiperforations 21 à proximité de la zone de liaison entre la bride correspondante 19, 20 et la paroi interne ou externe 2, 3 correspondante. L'une au moins des brides 19, 20, par exemple la bride radialement externe 20, comporte des ailettes de refroidissement 33 (figure 8) s'étendant au niveau des multiperforations 21 correspondantes, entre la bride externe 20 et la paroi externe 3. Les ailettes 33 et les multiperforations 21 permettent de favoriser le refroidissement de la bride 20 correspondante. Chaque multiperforation 13, 17, 21 peut présenter une section comportant une zone de forme carrée, rectangulaire ou losange et une zone de forme triangulaire (figure 10).

La paroi externe 3 comporte en outre une ouverture circulaire 25, entourée par un rebord 26. L'ouverture 25 est destinée au montage de moyens d'injection de carburant et d'axes de fixation non représentés. Une douille 27 est montée par sertissage dans ladite ouverture 25. Le diamètre interne de la douille 27 peut être obtenu par usinage.

Le tube à flamme 1 est réalisé de façon monobloc, c'est-à-dire d'une seule pièce, (à l'exception de la douille qui n'appartient pas au tube à flamme monobloc), par fabrication additive, en particulier par frittage ou fusion sélective de poudre, par exemple à l'aide d'un faisceau laser ou d'un faisceau d'électrons.

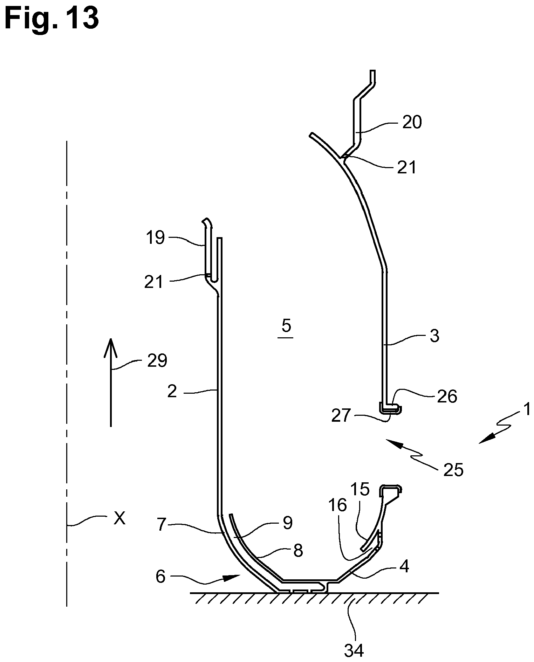

Un tel procédé comprend une étape durant laquelle est déposée, sur un plateau de fabrication 34 (figure 13), une première couche de poudre d'un métal ou d'un alliage métallique d'épaisseur contrôlée, puis une étape consistant à chauffer avec un moyen de chauffage (un faisceau laser ou un faisceau d'électrons) une zone prédéfinie de la couche de poudre, et de procéder en répétant ces étapes pour chaque couche supplémentaire, jusqu'à l'obtention, tranche par tranche, de la pièce finale.

Un outillage et un procédé de fabrication d'une pièce par fusion sélective ou frittage sélectif de poudre sont par exemple décrits dans la demande de brevet français FR 3 030 323 au nom de la Demanderesse.

Le tube à flamme monobloc 1 peut ainsi être réalisé par empilement de couches, la direction d'empilement des couches, illustrée par une flèche 29 à la figure 13, étant parallèle à l'axe X du tube à flamme 1.

Les couches ont des épaisseurs comprises par exemple entre 20 et 80 microns.

Le tube à flamme 1 est par exemple réalisé en un alliage à base de nickel ou de cobalt.

Les différentes zones du tube à flamme monobloc 1 ont de préférence une inclinaison faible avec l'axe d'empilement des couches. Ainsi, à l'exception du rebord, d'une partie de la paroi d'extrémité 4, des zones de raccordements et des têtes de pontets 10 dans la double paroi 6, les autres zones du tube à flamme 1 forme un angle inférieur à 60°, avec la direction d'empilement des couches. Des supports d'édification peuvent être utilisés pour les zones présentant une inclinaison supérieure, comme cela est connu en soi.

## Revendications

1. Procédé de fabrication d'un tube à flamme (1) pour une turbomachine, ledit tube à flamme (1) s'étendant autour d'un axe (X) et comportant une paroi annulaire radialement interne (2) et une paroi annulaire radialement externe (3), reliées l'une à l'autre par une paroi d'extrémité (4) ou de tête, la paroi interne (2), la paroi externe (3) et la paroi d'extrémité (4) définissant un volume interne (5), au moins une partie de ladite paroi d'extrémité (4) formant une double paroi (6) comprenant une première partie (7) et une seconde partie (8) reliées l'une à l'autre et écartées l'une de l'autre de manière à délimiter un canal (9) d'écoulement d'un flux d'air de refroidissement débouchant dans ledit volume interne (5), ledit canal d'écoulement (9) comportant au moins une ouverture d'entrée d'air (13), les première et seconde parties (7, 8) de la double paroi (6) étant reliées par des zones de liaison ou pontets (10) s'étendant dans le canal d'écoulement du flux d'air de refroidissement (9), ledit tube à flamme (1) étant réalisé par fabrication additive,
**caractérisé en ce qu'**au moins une zone de liaison ou pontet (10) comporte au moins une zone tronconique ou évasée (10a, 10b).

2. Procédé selon la revendication 1, **caractérisé en ce que** le tube à flamme (1) est réalisé par frittage ou fusion sélective de poudre, par exemple à l'aide d'un faisceau laser ou d'un faisceau d'électrons.

3. Procédé selon la revendication 1, **caractérisé en ce que** la zone tronconique ou évasée (10a, 10b) s'évase de la première partie (7) vers la seconde partie (8) de la double paroi (6).

4. Procédé selon l'une quelconque des revendications précédentes, **caractérisé en ce qu'**au moins une zone de liaison ou pontet (10) comporte au moins une première zone conique ou évasée (10a), située du côté de la première partie (7) et une seconde zone conique ou évasée (10b), située du côté de la seconde partie (8), la seconde zone conique ou évasée (10b) présentant un angle d'évasement supérieur à l'angle d'évasement de la première zone conique ou évasée (10a).

5. Procédé selon l'une des revendications 1 à 4, **caractérisé en ce que** les zones de liaisons ou pontets (10) sont agencées sous la forme d'au moins une rangée s'étendant circonférentiellement.

6. Procédé selon l'une des revendications 1 à 5, **caractérisé en ce que** la première partie (7) de la double paroi (6) comporte des multiperforations (13) débouchant dans le canal (9) d'écoulement du flux d'air de refroidissement, lesdites multiperforations (13) formant des ouvertures (13) d'entrée d'air.

7. Procédé selon l'une des revendications 1 à 6, **caractérisé en ce que** le tube à flamme est réalisé par empilement de couches, la direction d'empilement des couches étant parallèle à l'axe (X) du tube à flamme (1).

8. Procédé selon l'une des revendications 1 à 7, **caractérisé en ce que** le tube à flamme (1) est réalisé en un alliage à base de cobalt ou de nickel.

## Patentansprüche

1. Verfahren zur Herstellung eines Flammrohrs (1) für eine Turbomaschine, wobei sich das Flammrohr (1) um eine Achse (X) erstreckt und eine radial innere, ringförmige Wand (2) und eine radial äußere, ringförmige Wand (3) aufweist, die durch eine Endwand (4) oder Stirnwand miteinander verbunden sind, wobei die innere Wand (2), die äußere Wand (3) und die Endwand (4) ein Innenvolumen (5) definieren, zumindest ein Teil der Endwand (4) eine Doppelwand (6) bildet, die einen ersten Abschnitt (7) und einen zweiten Abschnitt (8) umfasst, die miteinander verbunden und voneinander beabstandet sind, so dass sie einen Strömungskanal (9) für einen Kühlluftstrom begrenzen, der in das Innenvolumen (5) mündet, wobei der Strömungskanal (9) zumindest eine Lufteinlassöffnung (13) aufweist, wobei der erste und der zweite Abschnitt (7, 8) der Doppelwand (6) durch Verbindungs- oder Brückenbereiche (10) verbunden sind, die sich in den Strömungskanal (9) für den Kühlluftstrom erstrecken, wobei das Flammrohr (1) durch additive Fertigung hergestellt wird,
**dadurch gekennzeichnet, dass** zumindest ein Verbindungs- oder Brückenbereich (10) zumindest einen kegelstumpfförmigen oder aufgeweiteten Bereich (10a, 10b) aufweist.

2. Verfahren nach Anspruch 1,
**dadurch gekennzeichnet, dass** das Flammrohr (1) durch selektives Sintern oder Schmelzen von Pulver hergestellt wird, beispielsweise mit Hilfe eines Laserstrahls oder eines Elektronenstrahls.

3. Verfahren nach Anspruch 1,
**dadurch gekennzeichnet, dass** sich der kegelstumpfförmige oder aufgeweitete Bereich (10a, 10b) vom ersten Abschnitt (7) zum zweiten Abschnitt (8) der Doppelwand (6) aufweitet.

4. Verfahren nach einem der vorhergehenden Ansprüche,
**dadurch gekennzeichnet, dass** zumindest ein Verbindungs- oder Brückenbereich (10) zumindest einen ersten kegelförmigen oder aufgeweiteten Bereich (10a), der sich auf der Seite des ersten Abschnitts (7) befindet, und einen zweiten kegelförmigen oder aufgeweiteten Bereich (10b), der sich auf der Seite des zweiten Abschnitts (8) befindet, umfasst, wobei der zweite kegelförmige oder aufgeweitete Bereich (10b) einen Aufweitungswinkel aufweist, der größer ist als der Aufweitungswinkel des ersten kegelförmigen oder aufgeweiteten Bereichs (10a).

5. Verfahren nach einem der Ansprüche 1 bis 4,
**dadurch gekennzeichnet, dass** die Verbindungs- oder Brückenbereiche (10) in Form von zumindest einer sich in Umfangsrichtung erstreckenden Aneinanderreihung angeordnet sind.

6. Verfahren nach einem der Ansprüche 1 bis 5,
**dadurch gekennzeichnet, dass** der erste Abschnitt (7) der Doppelwand (6) Mehrfachperforationen (13) aufweist, die in den Strömungskanal (9) für den Kühlluftstrom münden, wobei die Mehrfachperforationen (13) Lufteinlassöffnungen (13) bilden.

7. Verfahren nach einem der Ansprüche 1 bis 6,
**dadurch gekennzeichnet, dass** das Flammrohr durch Aufeinanderstapeln von Schichten hergestellt wird, wobei die Stapelrichtung der Schichten parallel zur Achse (X) des Flammrohrs (1) verläuft.

8. Verfahren nach einem der Ansprüche 1 bis 7,
**dadurch gekennzeichnet, dass** das Flammrohr (1) aus einer Legierung auf Kobalt- oder Nickelbasis hergestellt wird.

## Claims

1. A method for manufacturing a flame tube (1) for a turbomachine, the said flame tube (1) extending about an axis (X) and comprising an annular radially internal wall (2) and an annular radially external wall (3), connected to each other by an end wall (4) or head wall, the internal wall (2), the external wall (3) and the end wall (4) defining an internal volume (5), **characterized in that** at least one part of the said end wall (4) forming a double wall (6) comprising a first part (7) and a second part (8) connected to each other and spaced apart from each other so as to delimit a flow channel (9) for a flow of cooling air opening into the said internal volume (5), **characterized in that** the said flow channel (9) comprising at least one air-inlet opening (13), the first and second parts (7, 8) of the double wall (6) being connected by connecting zones or bridges (10) extending into the flow channel for the cooling-air flow (9), the said flame tube (1) being manufactured by additive manufacturing,
**characterized in that** at least one connecting area or bridge (10) comprises at least one frustoconical area or flared area (10a, 10b).

2. A method according to claim 1, **characterized in that** the flame tube (1) is manufactured by sintering or selective melting of powder, for example by means of a laser beam or electron beam.

3. A method according to claim 1, **characterized in that** the frustoconical area or flared area (10a, 10b) flares out from the first part (7) towards the second part (8) of the double wall (6).

4. A method according to one of the preceding claims, **characterized in that** at least one connecting area or bridge (10) comprises at least a first conical or flared area (10a), located on the side of the first part (7) and a second conical area or flared area (10b), located on the side of the second part (8), the second conical area or flared area (10b) having a larger flare angle than the flare angle of the first conical area or flared area (10a).

5. A method according to any of claims 1 to 4, **characterized in that** the connecting areas or bridges (10) are arranged in the form of at least one circumferentially extending row.

6. A method according to one of claims 1 to 5, **characterized in that** the first part (7) of the double wall (6) comprises multi-perforations (13) opening into the flow channel (9) of the cooling-air flow, the said multi-perforations (13) forming air-inlet openings (13).

7. A method according to one of claims 1 to 6, **characterized in that** the flame tube is manufactured by stacking layers, the stacking direction of the layers being parallel to the axis (X) of the flame tube (1).

8. A method according to one of claims 1 to 7, **characterized in that** the flame tube (1) is made of a cobalt-based or nickel-based alloy.
